(19) Europäisches Patentamt / European Patent Office / Office européen des brevets

(11) **EP 2 231 449 B1**

(12) **EUROPEAN PATENT SPECIFICATION**

(45) Date of publication and mention
of the grant of the patent:
**03.04.2013 Bulletin 2013/14**

(51) Int Cl.:
*B60L 7/18* (2006.01)     *B60L 11/18* (2006.01)
*B60T 8/1755* (2006.01)     *B60W 30/02* (2012.01)
*B60W 30/18* (2012.01)

(21) Application number: **08861579.4**

(22) Date of filing: **11.12.2008**

(86) International application number:
**PCT/IB2008/003434**

(87) International publication number:
**WO 2009/077835 (25.06.2009 Gazette 2009/26)**

(54) **VEHICLE BEHAVIOR CONTROL DEVICE, AND VEHICLE BEHAVIOR CONTROL METHOD**

VORRICHTUNG UND VERFAHREN ZUR STEUERUNG des Fahrverhaltens EINES FAHRZEUGES

DISPOSITIF DE COMMANDE DE COMPORTEMENT DE VÉHICULE, ET PROCÉDÉ DE COMMANDE DE COMPORTEMENT DE VÉHICULE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **14.12.2007 JP 2007323543**

(43) Date of publication of application:
**29.09.2010 Bulletin 2010/39**

(73) Proprietor: **TOYOTA JIDOSHA KABUSHIKI KAISHA**
**Toyota-shi,**
**Aichi-ken, 471-8571 (JP)**

(72) Inventor: **MURATA, Satoshi**
**Toyota-shi,**
**Aichi-ken, 471-8571 (JP)**

(74) Representative: **Winter, Brandl, Fürniss, Hübner, Röss, Kaiser, Polte - Partnerschaft**
**Bavariaring 10**
**80336 München (DE)**

(56) References cited:
**EP-A- 1 555 184      WO-A-2004/080774**
**US-A1- 2003 230 933      US-A1- 2004 176 899**

**Description**

BACKGROUND OF THE INVENTION

1. Field of the Invention

The invention relates to a vehicle behavior control device and a vehicle behavior control method. More particularly, the invention relates to a device for controlling the behavior of a vehicle which includes a vehicle-mounted battery into and from which electric power can be charged and discharged, electric motors that are provided individually for a plurality of wheels, and that apply driving torque to corresponding wheels when supplied with electric power from the vehicle-mounted battery or supply regenerative electric power to the vehicle-mounted battery by causing the corresponding wheels to generate regenerative braking torque, and friction control means for causing the wheels to generate friction braking torque.

2. Description of the Related Art

A brake device is known which generates a larger braking force at the time of emergency brake operation than at the time of usual brake operation (see, e.g., Japanese Patent Application Publication No. 2007-50751 (JP-A-2007-50751)). This brake device includes braking means for causing wheels to generate friction braking force, and an electric motor that causes wheels to generates regenerative braking force. The regenerative electric power generated by the electric motor when the regenerative braking force is generated on the wheels is recovered into the battery. Besides, this electric motor serves as a vehicle power source that drives the wheels when supplied with electric power from the battery.
In the foregoing brake device, the state of charge of the battery is firstly detected. Then, on the basis of the detected state of charge of the battery, the magnitude of regenerative braking force that can be generated by the motor is calculated, and the pattern of friction braking force at the time of emergency brake operation is changed according to the calculated magnitude of regenerative braking force. Concretely, the smaller the calculated regenerative braking force is, the greater the rising rate of the friction braking force at the time of emergency brake operation is made, or the greater the maximum braking force at the time of emergency brake operation is made. Therefore, according to the brake device described above, it becomes possible to prevent the responsiveness of braking at the time of emergency brake operation from declining when the regenerative braking force that can be generated by the motor is small.
By the way, in these days, there are various vehicle behavior control systems that accomplish their tasks by making the braking forces and drive forces different for each of the wheels, such as an ABS (Antilock Brake System) that prevents the wheels from locking at the time of braking, a TCS (Traction Control System) that prevents the wheels from racing at the time of acceleration, a VSC (Vehicle Stability Control) that stabilizes the cornering behavior of the vehicle, etc. Such systems need a mechanism or construction that is capable of making the braking forces and the drive forces to be generated different for each of the wheels.
Unlike in the vehicle equipped with only one electric motor capable of driving wheels as described in Japanese Patent Application Publication No. 2007-50751 (JP-A-2007-50751) mentioned above, in a vehicle in which electric motors are provided separately for individual wheels and the wheels are driven by their corresponding electric motors, the electric motors of the individual motors are capable of driving their corresponding wheels with different drive forces, and are also capable of causing the wheels to generate different regenerative braking forces at the time of braking and recovering the regenerative electric power into the battery. Therefore, it is possible to realize vehicle behavior control systems, such as the ABS, the VSC, etc., by using the electric motors of the individual wheels.
However, when the battery is in a fully charged state or a nearly fully charged state, no regenerative electric power or only a small amount of regenerative electric power can be supplied to the battery. Hence, if the generation of the regenerative braking force for the wheels is restricted taking into consideration the amount of electricity stored in the battery, it becomes necessary to increase the friction braking force by the amount of the reduction in the regenerative braking force with respect to the required braking force of the wheels. As a result, if a vehicle behavior control system in which it is necessary to cause the individual wheels to generate different braking forces is to be realized, it becomes inevitable to provide a hydraulic control mechanism capable of making the friction braking forces of the individual wheels different from each other by disposing pressure-increasing valves or pressure-decreasing valves separately for the individual wheels, or the like. In a system that does not have such a hydraulic control mechanism, it becomes inevitable to suspend the operation of the vehicle behavior control system when the battery is in the fully charged state or the nearly fully charged state.
A vehicle behavior control device and a vehicle behavior control method according to the preamble of independent claim 1 and 13 respectively are known from document US 2004 176899 A1.

## SUMMARY OF THE INVENTION

The invention provides a vehicle behavior control device capable of appropriately controlling the behavior of a vehicle by using electric motors that are provided individually for wheels even at the time of the fully charged state of the battery, without a need for the provision of a hydraulic control mechanism that independently controls the friction braking force of each wheel.

A first aspect of the invention relates to a vehicle behavior control device which includes a vehicle-mounted battery into and from which electric power is able to be charged and discharged, electric motors that are provided individually for a plurality of wheels of a vehicle, and that apply driving torque to corresponding ones of the wheels when supplied with electric power from the vehicle-mounted battery or supply regenerative electric power to the vehicle-mounted battery by causing the corresponding ones of the wheels to generate regenerative braking torque, and friction control means for causing the wheels to generate friction braking torque, and which controls behavior of the vehicle by making braking/driving forces applied individually to the wheels different from each other. The vehicle behavior control device includes required torque computation means for computing required torques that the wheels are individually required to generate, based on vehicle behavior, and torque value setting means for setting, with respect to the required torque of each wheel calculated by the required torque calculation means, a first torque value provided uniformly for all the wheels which is composed of the friction braking torque that the wheel is caused to generate by the friction control means, and a second torque value provided for each wheel independently of each other which is composed of at least one of the driving torque and the regenerative braking torque that the wheel is caused to generate by a corresponding one of the electric motors.

In this aspect, the required torques that the wheels are each required to generate are computed on the basis of the vehicle behavior. Then, with respect to the required torque of each one of the wheels, a torque value provided uniformly for the wheels is set as a value of the friction braking torque that is generated on the wheel by the friction control means, and a torque value provided for each one of the electric motors of the wheels independently of each other is set as a value of the driving torque or the regenerative braking torque that is generated on the wheel. Therefore, required torques can be appropriately applied to the individual wheels while the friction braking torques on the wheels are equal, so that it is not necessary to provide a hydraulic control mechanism capable of making the friction braking torques of the wheels different from each other. Hence, the vehicle behavior control device is able to appropriately control the behavior of the vehicle by using the electric motors provided individually for the wheels, without the provision of a hydraulic control mechanism that independently controls the friction braking torques of the individual wheels.

In the foregoing vehicle behavior control device, the torque value setting means may include amount-of-remaining-charge measurement means for measuring amount of remaining charge of the vehicle-mounted battery, and torque distribution alteration means for altering distribution between the first torque value and the second torque value according to the amount of remaining charge measured by the amount-of-remaining-charge measurement means.

In this construction, the distribution ratio between the friction braking torque of each wheel by the friction control means and the driving torque or the regenerative braking torque of the wheel by a corresponding one of the electric motors which ratio is set with respect to the required torque of that wheel is altered according to the amount of remaining charge of the vehicle-mounted battery. With respect to a certain required torque of a wheel, if the distribution rate of the friction braking torque by the friction control means is increased, it is necessary to increase the distribution rate of the driving torque by a corresponding electric motor or to decrease the distribution rate of the regenerative braking torque by the electric motor, and therefore the electric power consumed by the electric motor can be made larger or the regenerative electric power recovered into the battery can be made smaller. In this respect, when the amount of remaining charge of the vehicle-mounted battery is relatively large, the increasing of the distribution rate of the friction braking torque that the wheels are uniformly caused to generate by the friction control means will make it possible to make the distribution rate of the torque generated on each wheel by a corresponding one of the electric motors smaller to the electric power regeneration side and larger to the electric power consumption side. Hence, even when the vehicle-mounted battery is fully charged, the behavior of the vehicle can be appropriately controlled by using the electric motors provided for the individual wheels, without the provision of a hydraulic control mechanism that controls the friction braking torque of each of the wheels independently of each other.

Besides, in the foregoing vehicle behavior control device, the torque distribution alteration means may increase distribution rate of the first torque value for the amount of remaining charge that is relatively large.

Furthermore, the torque distribution alteration means may increase the distribution rate of the second torque value composed of the driving torque if the distribution rate of the first torque value is increased.

Besides, the torque distribution alteration means may decrease the distribution rate of the second torque value composed of the regenerative braking torque if the distribution rate of the first torque value is increased.

In such a construction, if the distribution rate of the friction braking torque that the wheels are uniformly caused to generate by the friction control means is made larger the larger the amount of remaining charge of the vehicle-mounted battery is, it becomes possible to make the distribution rate of the torque of each wheel generated by a corresponding one of the electric motors smaller to the electric power regeneration side and larger to the electric power consumption side. Hence, even when the vehicle-mounted battery is fully charged, the behavior of the vehicle can be appropriately controlled by using the electric motors provided for the individual wheels, without the provision of a hydraulic control mechanism that controls the friction braking torque of each of the wheels independently of each other.

In the foregoing vehicle behavior control device, the torque distribution alteration means may set the second torque value that is composed only of the driving torque, when the amount of remaining charge is in a fully charged state.

Besides, during a period during which the amount of remaining charge is at least in the fully charged state, the torque distribution alteration means may alter the distribution between the first torque value and the second torque value so that a totalized value of the second torque values during the period is on a driving torque side.

In this construction, when the amount of remaining charge of the battery is at least in the fully charged state, the total torque value obtained by summing the torque values set for the electric motors of the wheels is on the driving torque side, so that the electric power of the battery can be consumed by driving electric motors on the whole. Hence, even when the vehicle-mounted battery is fully charged, the behavior of the vehicle can be appropriately controlled by using the electric motors provided for the individual wheels, without the provision of a hydraulic control mechanism that controls the friction braking torque of each of the wheels independently of each other.

In the foregoing vehicle behavior control device, the friction control means may be a friction control mechanism that simultaneously applies equal friction braking torques to at least two wheels.

In this construction, since equal friction braking torques can be simultaneously applied to at least two wheels, it becomes unnecessary to provide a hydraulic control mechanism capable of making the friction braking torques of these wheels different from each other.

The friction control mechanism may include a master cylinder that connects to the brake operation means, a wheel cylinder that is provided separately for each wheel, and that communicates with the master cylinder via a communication passageway so as to apply the friction braking torque to wheel, a pump capable of ejecting a brake fluid of high pressure, and a linear valve that adjusts brake fluid pressure of each wheel cylinder that is supplied from an ejection side of the pump and is discharged to a reservoir tank.

Furthermore, in the vehicle behavior control device, the required torque computation means may compute the required torque separately for each wheel that needs to be generated so as to stabilize a cornering behavior of the vehicle based on a difference of target yaw rate and actual yaw rate of the vehicle.

Besides, the required torque computation means may compute the required torque separately for each wheel that needs to be generated so as to stabilize the cornering behavior of the vehicle based on the actual yaw rate of the vehicle and acceleration of the vehicle.

The required torque computation means may determine whether or not there is a wheel slip caused by application of the driving torque with regard to each of the wheels, and may compute the required torque separately for each wheel that needs to be generated so as to restrain each wheel from racing during acceleration, based on a result of determination regarding the wheel slip.

The required torque computation means may determine whether or not there is a wheel slip caused by application of the driving torque with regard to each of the wheels, and may compute the required torque separately for each wheel that needs to be generated so as to restrain each wheel from locking during braking, based on a result of determination regarding the slip.

A second aspect of the invention relates to a vehicle behavior control method for a vehicle which includes a vehicle-mounted battery into and from which electric power is able to be charged and discharged, electric motors that are provided individually for a plurality of wheels of the vehicle, and that apply driving torque to corresponding ones of the wheels when supplied with electric power from the vehicle-mounted battery or supply regenerative electric power to the vehicle-mounted battery by causing the corresponding ones of the wheels to generate regenerative braking torque, and friction control means for causing the wheels to generate friction braking torque, and which controls behavior of the vehicle by making braking/driving forces applied individually to the wheels different from each other. This vehicle behavior control method includes the step of computing required torques that is to be generated by the wheels, based on vehicle behavior, and the step of setting a first torque value that is composed of the friction braking torque that each wheel is caused to generate by the friction control means, and a second torque value that is composed of at least one of the driving torque and the regenerative braking torque that each wheel is independently caused to generate by a corresponding one of the electric motors, with respect to the required torque calculated.

Besides, the vehicle behavior control method may further include the step of measuring amount of remaining charge of the vehicle-mounted battery, and the step of altering distribution between the first torque value and the second torque value according to the amount of remaining charge.

According to the invention, even when the vehicle-mounted battery is fully charged, the behavior of the vehicle can be appropriately controlled by using the electric motors provided for the individual wheels, without the provision of a hydraulic control mechanism that controls the friction braking torque of each of the wheels independently of each other.

BRIEF DESCRIPTION OF THE DRAWINGS

The foregoing and further objects, features and advantages of the invention will become apparent from the following description of embodiments with reference to the accompanying drawings, wherein like numerals are used to represent like elements and wherein:

FIG 1 is a construction diagram of a braking/driving system mounted in a vehicle that is equipped with a vehicle behavior control device that is an embodiment of the invention;

FIG 2 is a flowchart of an example of a control routine that is executed by the vehicle behavior control device of this embodiment in order to perform a VSC control; and

FIG 3 is a diagram representing how the driving torque or the regenerative braking torque by an electric motor is changed and set according to the switching between two levels of the friction braking torque generated by a friction control mechanism which is set with respect to the required torques that are required of wheels FR, FL, RR, RL at the time of execution of the VSC control; and

FIG 4A and FIG 4B are diagrams for explaining that in the vehicle behavior control device of the embodiment, the distribution between the driving torque or the regenerative braking torque by the electric motor of a wheel and the friction braking torque by the friction braking mechanism which is set with respect to the required torques that are required of the wheels at the time of execution of the VSC control is altered according to the amount of remaining charge of a vehicle-mounted battery.

DETAILED DESCRIPTION OF THE EMBODIMENTS

Concrete embodiments of the invention will be described hereinafter with reference to the drawings.

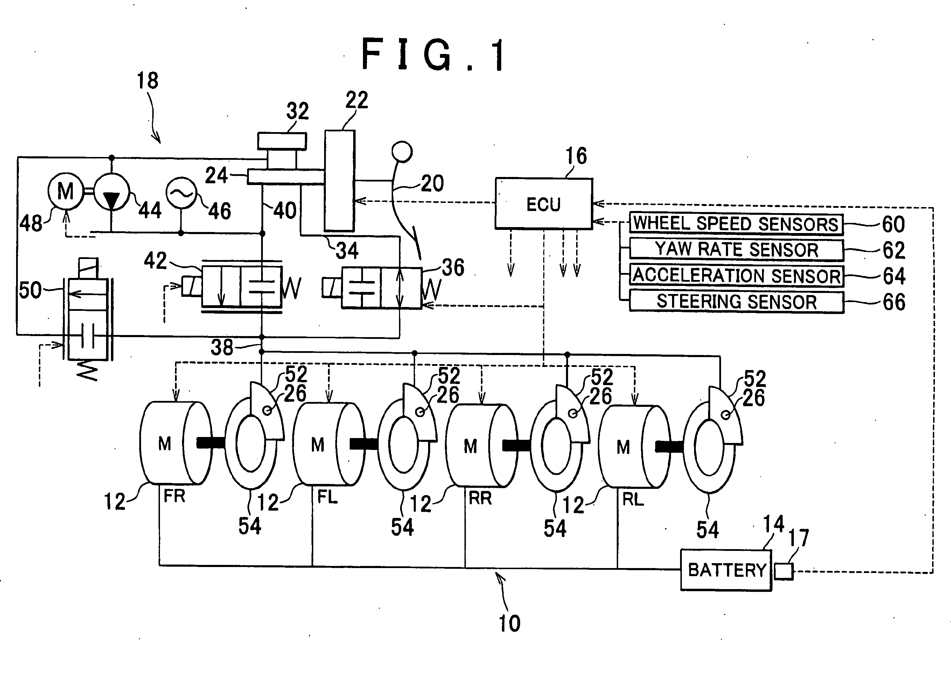

FIG 1 shows a construction diagram of a braking/driving system 10 mounted in a vehicle equipped with a vehicle behavior control device in accordance with an embodiment of the invention. In this embodiment, the vehicle is a so-called in-wheel electric motor vehicle equipped with electric motors that are provided individually for wheels as drive devices that drive the corresponding wheels. The following description will be made with an example of a four-wheel drive vehicle whose four wheels are all driven by electric motors.

The braking/driving system 10 has electric motors 12 that are provided individually for wheels FR, FL, RR, RL. Each electric motor 12 is linked to a corresponding one of the wheels FR, FL, RR, RL via a speed reducer or the like. Besides, the electric motors 12 are electrically connected to a vehicle-mounted battery 14 of the vehicle, and supply and receive electric power to and from the vehicle-mounted battery 14.

The electric motors 12 are electrically connected to an electronic control unit (ECU) 16 of the vehicle behavior control device. Each electric motor 12 applies, to a corresponding one of the wheels FR, FL, RR, RL, a driving torque for driving that wheel by using the electric power that is supplied from the vehicle-mounted battery 14 upon a drive signal sent from the ECU 16. Besides, each electric motor 12 is able to operate as a generator during braking, that is, is able to supply regenerative electric power to the vehicle-mounted battery 14 while generating regenerative braking torque for the corresponding one of the wheels FR, FL, RR, RL.

A battery state sensor 17 that detects states of the vehicle-mounted battery 14, such as the inter-terminal voltage, the charging/discharging current, the battery temperature, etc., is electrically connected to the ECU 16. The ECU 16 measures the various states of the vehicle-mounted battery 14 on the basis of an output of the battery state sensor 17, and thereby measures the amount of remaining charge of the battery.

Besides, the braking/driving system 10 also includes a friction control mechanism 18 that causes the wheels FR, FL, RR, RL to generate friction braking torque due to the effect of the pressure of the brake fluid (hydraulic pressure), separately from the regenerative braking torque provided by the electric motors 12. The friction control mechanism 18 has a brake pedal 20 that is operable by a vehicle driver, a master cylinder 24 that is connected to the brake pedal 20 via a booster 22, and wheel cylinders 26 of the wheels FR, FL, RR, RL which are connected to the master cylinder 24.

The booster 22 is electrically connected to the ECU 16. The booster 22, upon a command from the ECU 16, generates an assist force for boosting, by a predetermined boost ratio, the input from the brake pedal 20 when the brake pedal 20 is depressed. Besides, the master cylinder 24 converts the depressing force on the brake pedal 20 into a hydraulic pressure of the brake fluid by boosting the force at a predetermined ratio.

A reservoir tank 32 that stores the brake fluid is connected to a hydraulic pressure chamber of the master cylinder 24. Besides, a first communication passageway 34 is connected to the hydraulic pressure chamber of the master cylinder 24. A high-pressure passageway 38 is connected to the first communication passageway 34 via a master cut valve 36. The master cut valve 36 is a normally open type electromagnetic valve that is electrically connected to the ECU 16. The master cut valve 36 assumes a closed state due to the supply of a drive signal from the ECU 16.

The high-pressure passageway 38 is divided into branch passages 38FR, 38FL, 38RR, 38RL whose number is equal to the number of the wheels FR, FL, RR, RL (concretely, four). Each of the branch passages 38FR, 38FL, 38RR, 38RL connects to the hydraulic pressure chamber of the wheel cylinder 26 of a corresponding one of the wheels FR, FL, RR, RL. That is, the master cut valve 36 has a function of opening and shutting the communication between the master cylinder 24 and the wheel cylinders 26 via the first communication passageway 34. The hydraulic pressure generated by the master cylinder 24 is supplied to each wheel cylinder 26 through the master cut valve 36 when the master cut valve 36 is open, but is not supplied to the wheel cylinders 26 through the master cut valve 36 when the master cut valve 36 is closed.

Besides, a second communication passageway 40 is connected to the hydraulic pressure chamber of the master cylinder 24. The high-pressure passageway 38 is connected in communication to the second communication passageway 40, via a pressure-increasing linear valve 42. The pressure-increasing linear valve 42 is a normally closed type valve that is electrically connected to the ECU 16, and is also a linear valve whose opening degree is adjusted according to the drive signal supplied from the ECU 16. The pressure-increasing linear valve 42 has a function of increasing and adjusting the hydraulic pressure of the brake fluid (wheel cylinder pressure) that is supplied from the second communication passageway 40 side to the high-pressure passageway 38 side.

The friction control mechanism 18 has a pump 44, and an accumulator 46. An upstream side of the pump 44 is connected to the reservoir tank 32, and a downstream side thereof is connected to the second communication passageway 40. The pump 44 is connected to a pump motor 48 that is electrically connected to the ECU 16, and is operated by driving the pump motor 48. The pump motor 48 is driven as the drive signal is supplied from the ECU 16. The pump 44, when driven by the pump motor 48, pumps up the brake fluid from the reservoir tank 32, and ejects the brake fluid with high pressure into the second communication passageway 40 on the upstream side of the pressure-increasing linear valve 42.

The accumulator 46 is connected to the second communication passageway 40, that is, the ejection side of the pump 44. The accumulator 46 has a function of accumulating the hydraulic pressure of the high-pressure brake fluid that is generated by the depression of the brake pedal 20 or that is increased by the driving of the pump 44. It is also permissible to adopt a construction in which when the hydraulic pressure of the brake fluid (accumulator pressure) of the accumulator 46 reaches a predetermined pressure (e.g., 30 MPa), a relief valve (not shown) is opened to release the high-pressure brake fluid into the reservoir tank 32. Besides, a check valve may also be provided at an upstream side of a connecting point on the second communication passageway 40 at which the ejection side of the pump 44 is connected thereto, in order to prevent the high-pressure brake fluid from reversing from the ejection side of the pump 44 to the master cylinder 24 via the second communication passageway 40.

The high-pressure passageway 38 is connected in communication with the reservoir tank 32 via a pressure-decreasing linear valve 50. The pressure-decreasing linear valve 50 is a normally closed type valve that is electrically connected to the ECU 16, and is a linear valve whose opening degree is adjusted according to the drive signal supplied from the ECU 16. The pressure-decreasing linear valve 50 has a function of decreasing and adjusting the hydraulic pressure (wheel cylinder pressure) of the brake fluid in the high-pressure passageway 38.

The wheel cylinder 26 of each of the wheels FR, FL, RR, RL presses a brake pad of a corresponding caliper 52 against a brake disc 54 that rotates integrally with a corresponding one of the wheels FR, FL, RR, RL, with the hydraulic pressure of the brake fluid supplied in the high-pressure passageway 38. That is, a friction braking torque according to the hydraulic pressure in each of the wheel cylinders 26 is generated on a corresponding one of the wheels FR, FL, RR, RL by the operation of that wheel cylinder 26.

Various other sensors and the like are also electrically connected to the ECU 16, including wheel speed sensors 60, a yaw rate sensor 62, an acceleration sensor 64, and a steering sensor 66. The wheel speed sensors 60 are disposed at each of the wheels FR, FL, RR, RL, and each supply the ECU 16 with a signal commensurate with the speed of a corresponding one of the wheels. The yaw rate sensor 62 supplies the ECU 16 with a signal commensurate with the yaw rate of the vehicle body. The acceleration sensor 64 supplies the ECU 16 with signals commensurate with the accelerations of the vehicle body in the forward, backward, leftward and rightward directions. Besides, the steering sensor 66 supplies the ECU 16 with a signal commensurate with the steering angle and the steering direction of the steering handle that the driver operates.

The ECU 16 detects the speed of each of the wheels FR, FL, RR, RL, and also detects the vehicle body speed, on the basis of the outputs of the wheel speed sensors 60. Besides, the ECU 16 detects the actual yaw rate of the vehicle body on the basis of the output of the yaw rate sensor 62, and detects the accelerations of the vehicle body in the forward, backward, leftward and rightward directions on the basis of the output of the acceleration sensor 64, and detects the steering angle and the steering direction of the steering handle on the basis of output of the steering sensor 66.

Next, operations of the braking/driving system of the embodiment will be described.

In the braking/driving system of the embodiment, the ECU 16, during travel of the vehicle, computes the driving torques by which the wheels FR, FL, RR, RL are to be individually driven, on the basis of the depression operation on the accelerator pedal, and drives the electric motors 12 of the wheels FR, FL, RR, RL so that each wheel is given a corresponding one of the computed driving torques. In this case, electric power is supplied from the vehicle-mounted battery 14 to the electric motors 12 of the wheels FR, FL, RR, RL so that the driving torques are given to the wheels FR, FL, RR, RL. Therefore, the wheels FR, FL, RR, RL are driven by the electric motor 12 working as drive force sources.

Besides, the ECU 16 determines whether or not there is wheel slip due to the application of the driving torques computed as described above, with respect to each of the wheels FR, FL, RR, RL In the case where there is such occurrence of slip, the ECU 16 performs a control for restraining the slip (TCS control). Concretely, in the case where there is slip occurring on any one of the wheels FR, FL, RR, RL due to the application of the driving torque to that wheel, the ECU 16 reduces the driving torque applied to the wheel by the corresponding electric motor 12, so as to restrain the slip. When the driving torque applied by the electric motor 12 is reduced, the driving of the wheel corresponding to the electric motor 12 alone is changed so as to restrain the slip. Therefore, even if slip is caused on any one of the wheels FR, FL, RR, RL by the application of driving torque thereto, the slip of the wheel can be eliminated by reducing only the driving torque that is applied to that wheel.

Besides, at the time of usual braking of the vehicle, the ECU 16 opens the master cut valve 36, and closes both the pressure-increasing linear valve 42 and the pressure-decreasing linear valve 50 (the state as shown in FIG. 1). In this case, the wheel cylinders 26 of the wheels FR, FL, RR, RL communicate with the master cylinder 24 through the first communication passageway 34, so that a wheel cylinder pressure equal to the pressure of the master cylinder 24 is led to each wheel cylinder 26. Therefore, at the time of usual braking of the vehicle, each of the wheels FR, FL, RR, RL can be caused to generate a friction braking torque commensurate with the depression of the brake pedal 20 by the friction control mechanism 18. Incidentally, at this time, the wheel cylinder pressures of the wheels FR, FL, RR, RL are equal to each other.

Besides, the ECU 16 estimates the driver's intention of emergency braking on the basis of the speed of the depressing operation of the brake pedal 20. If the intention of emergency braking is estimated, the ECU 16 increases the boost ratio of the booster 22. In this case, each wheel cylinder 26 is provided with a greater wheel cylinder pressure than during usual braking. Therefore, at the time of emergency braking of the vehicle, the friction control mechanism 18 is able to cause the wheels FR, FL, RR, RL to generate a great friction braking torque commensurate with the depression of the brake pedal 20 and the assist force. Incidentally, at this time, the wheel cylinder pressures of the wheels FR, FL, RR, RL are equal to each other.

Besides, the ECU 16 determines whether or not there is slip occurring due to the application of friction braking torque by the friction control mechanism 18, with respect to each of the wheels FR, FL, RR, RL. In the case where there is such occurrence of slip, the ECU 16 performs a control for restraining the slip (ABS control). Concretely, in the case where there is slip occurring on any one of the wheels FR, FL, RR, RL due to the application of equal friction braking torques, the ECU 16 drives the electric motor 12 of that wheel so that the slip is restrained. In this case, driving torque is applied to that wheel by supplying electric power from the vehicle-mounted battery 14 to that electric motor 12, that is, consuming electric power of the vehicle-mounted battery 14. Therefore, even if slip is caused on any one of the wheels FR, FL, RR, RL by the application of friction braking torque, the slip can be eliminated by applying driving torque to that wheel from the corresponding electric motor 12.

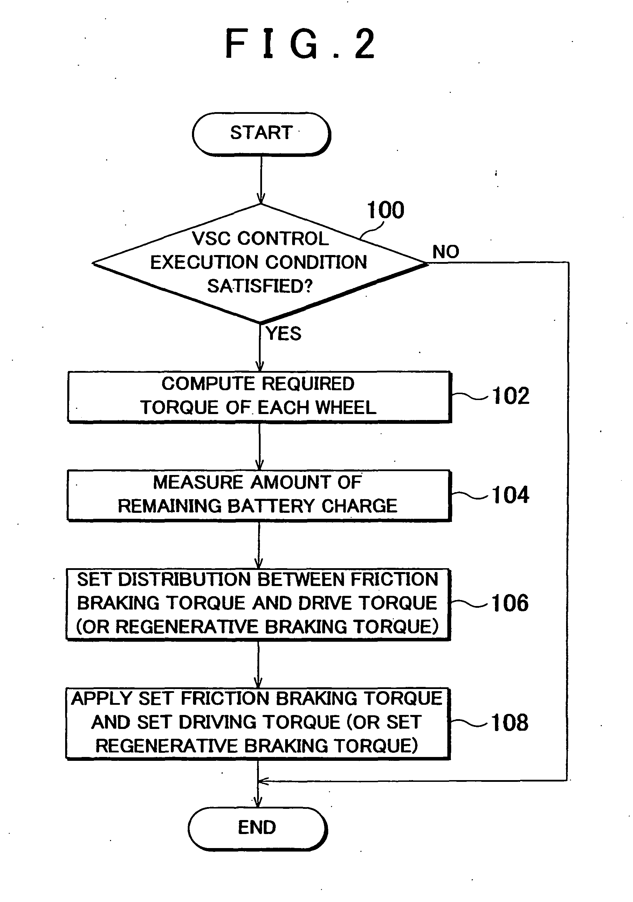

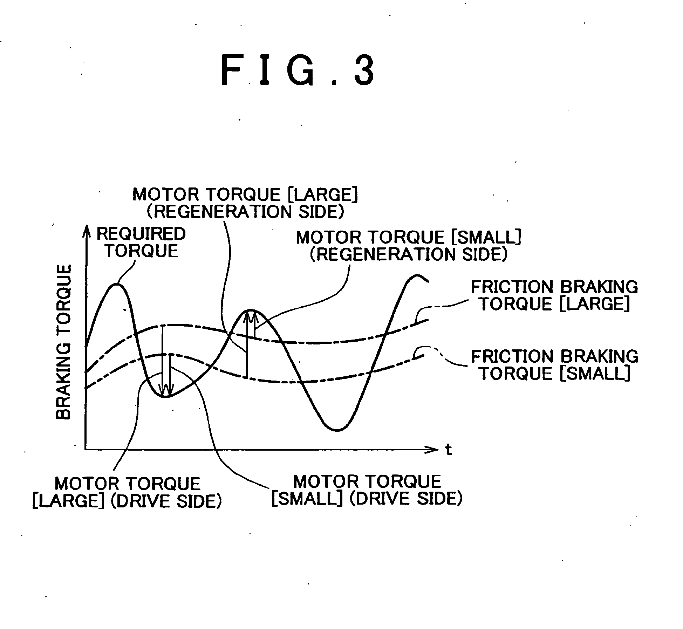

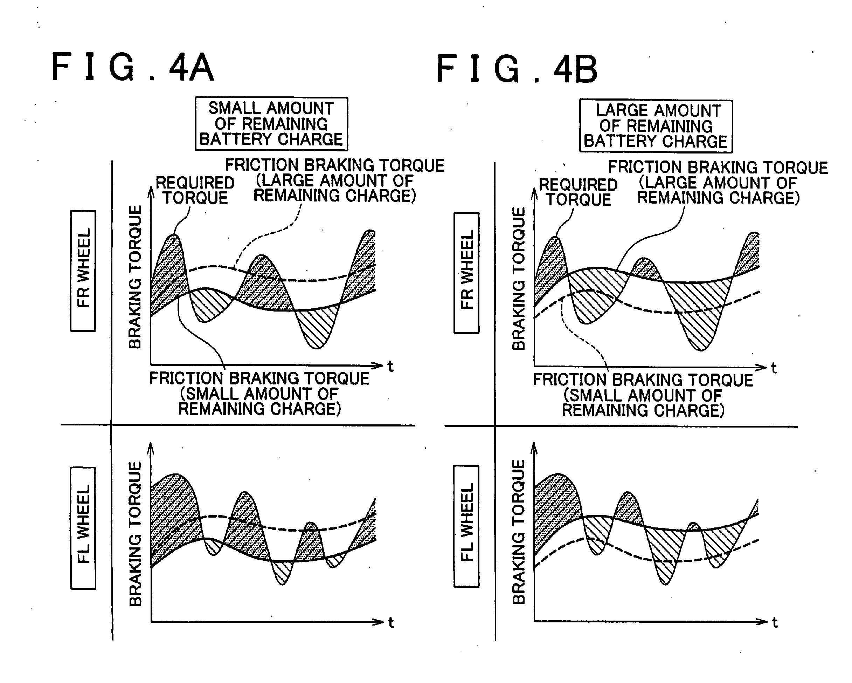

FIG 2 shows a flowchart of an example of a control routine in which the ECU 16 in the vehicle behavior control device executes the VSC control. FIG 3 is a diagram representing how the driving torque or the regenerative braking torque by an electric motor 12 is changed and set according to the switching between two levels of the friction braking torque generated by the friction control mechanism 18 which is set with respect to the required torques that are required of the wheels FR, FL, RR, RL at the time of execution of the VSC control. FIGS. 4A and 4B are diagrams for explaining that in the vehicle behavior control device of the embodiment, the distribution between the driving torque or the regenerative braking torque by the electric motor of a wheel and the friction braking torque by the friction braking mechanism 18 which is set with respect to the required torques that are required of the wheels FR, FL, RR, RL at the time of execution of the VSC control is altered according to the amount of remaining charge of the vehicle-mounted battery 14. Incidentally, FIGS. 4A and 4B show the representations regarding only the front wheels FR, FL.

Furthermore, in the vehicle behavior control device of the embodiment, the ECU 16 performs determination regarding a vehicle behavior (cornering behavior, or tendency at the time of straight-line travel braking) by using the outputs of the wheel speed sensors 60, the yaw rate sensor 62, the acceleration sensor 64, and the steering sensor 66. In the case where the vehicle behavior is unstable, the ECU 16 performs a control for stabilizing the vehicle behavior (the VSC control).

Concretely, firstly, for example, the ECU 16 computes the slip angle and the slip angular speed of the vehicle body on the basis of the actual yaw rate from the yaw rate sensor 62 and the forward, backward, leftward and rightward accelerations from the acceleration sensor 64, and determines the presence/absence of a rear wheel skid tendency of the vehicle body on the basis of the computation results. Besides, the ECU 16 computes the yaw rate of the vehicle body that is used as a target on the basis of the steering handle steering angle from the steering sensor 66, and the vehicle body speed from the wheel speed sensors 60, and then determines the presence/absence of a front wheel skid tendency of the vehicle body on the basis of the target yaw rate and the actual yaw rate from the yaw rate sensor 62. On the basis of the presence/absence of the skid tendency of the rear wheels and of the front wheels of the vehicle body, the ECU 16 determines whether or not a condition for executing the VSC control is satisfied (step 100). Concretely, if the slip angle of the vehicle body is large and the slip angular speed is large, the ECU 16 determines that the vehicle body has a rear wheel skid tendency, and therefore that the execution condition for the VSC control is satisfied. If the actual yaw rate is smaller than the target yaw rate, the ECU 16 determines that the vehicle body has a front wheel skid tendency, and therefore that the execution condition for the VSC control is satisfied.

In the case where it is determined that the execution condition for the VSC control is satisfied, the ECU 16 computes required torques that need to be generated by the wheels FR, FL, RR, RL in order to eliminate the instability, on the basis of the unstable vehicle behavior tendency (step 102). For example, in the case where it is determined that the vehicle body has a rear wheel skid tendency, the ECU 16 computes, on the basis of the vehicle body slip angle and the vehicle body slip angular speed, required braking torques that are to be generated by the front and rear wheels of the outer side during cornering so as to create a moment that restrains the rear wheel skid tendency, about the center of gravity of the vehicle according to the degree of the rear wheel skid tendency. Besides, in the case where it is determined that the vehicle body has a front wheel skid tendency, the ECU 16 computes, on the basis of a difference between the target yaw rate and the actual yaw rate, required torques (required braking torques or required driving torques) that are to be generated by the front and rear wheels so as to create a moment that restrains the front wheel skid tendency, about the center of gravity of the vehicle according to the degree of the front wheel skid tendency.

In the braking/driving system of this embodiment, the braking torque of each of the wheels FR, FL, RR, RL is generated by using at least one of the friction control mechanism 18 that generates equal friction braking torques on all the wheels, and a corresponding one of the electric motors 12 that generate regenerative braking torques on their respective wheels independently of each other. Besides, the driving torques of the wheels FR, FL, RR, RL are generated by using the electric motors 12. Therefore, in order to cause each of the wheels FR, FL, RR, RL to generate a required torque that is calculated as described above, it becomes necessary to set the distribution between the friction braking torque by the friction control mechanism 18 and the regenerative braking torque or the driving torque by the corresponding electric motor 12.

In the case where, at the time of execution of the VSC control, the friction braking torque that the friction control mechanism 18 causes the wheels FR, FL, RR, RL to generate is always constant or changes in accordance with the pressure regulation carried out by the linear valves 42, 50, it sometimes happens that the regenerative braking torque generated on a wheel FR, FL, RR, RL by its corresponding electric motor 12 which is set with respect to the required torque of the wheel becomes relatively great since the required torque of any one of the wheels FR, FL, RR, RL can change moment by moment, more quickly than the possible speed of the pressure regulation of the linear valves 42, 50. When the amount of remaining charge of the vehicle-mounted battery 14 is small, the generation of large regenerative braking torque does not cause inconvenience since the regenerative electric power generated by the generation of the large regenerative braking torque can be recovered into the vehicle-mounted battery 14. However, when the amount of remaining charge of the vehicle-mounted battery 14 is large or the vehicle-mounted battery 14 is in the fully charged state, the generation of large regenerative braking torque causes a disadvantage that the regenerative electric power cannot be recovered into the vehicle-mounted battery 14.

In order to eliminate this disadvantage, it is conceivable to provide a friction control mechanism capable of causing the wheels FR, FL, RR, RL to generate friction braking torques different from each other. Furthermore, in a system in which such a friction control mechanism is not provided, it is conceivable to suspend the execution of the VSC control when the vehicle-mounted battery 14 is in the fully charged state or a nearly fully charged state. However, the former technique requires enlarged and complicated constructions for the individual wheels FR, FL, RR, RL in the braking/driving system. The latter technique brings about an event that the execution of the VSC control is restricted when the amount of remaining charge of the vehicle-mounted battery 14 is large.

In the case where the required torque that one of the wheels FR, FL, RR, RL is required to generate is as shown in FIG. 3, when the distribution rate of the friction braking torque by the friction control mechanism 18 is relatively low (as shown by a dashed two-dotted line), the distribution rate of the regenerative braking torque by the electric motor 12 becomes relatively high and therefore the regenerative electric power recovered into the vehicle-mounted battery 14 becomes large, or the distribution rate of the driving torque by the electric motor 12 becomes relatively low and therefore the electric power extracted from the vehicle-mounted battery 14 becomes small. On the other hand, when the distribution rate of the friction braking torque by the friction control mechanism 18 is relatively high (as shown by a dashed one-dotted line), the distribution rate of the regenerative braking torque by the electric motor 12 becomes relatively low and therefore the regenerative electric power recovered into the vehicle-mounted battery 14 becomes small, or the distribution rate of the driving torque by the electric motor 12 becomes relatively high and therefore the electric power extracted from the vehicle-mounted battery 14 becomes large.

Then, in the case where the distribution rate of the regenerative braking torque of the electric motor 12 of each of the wheels FR, FL, RR, RL is relatively low or the distribution rate of the driving torque by the electric motor 12 thereof is relatively high, if a total torque value obtained by summing the regenerative braking torques and the driving torques that are set for the individual electric motors 12 of the wheels FR, FL, RR, RL is on the driving torque side (the side where electric power is consumed), the electric power supplied from the vehicle-mounted battery 14 to the electric motors 12 and consumed thereby is greater than the regenerative electric power recovered from the electric motors 12 into the vehicle-mounted battery 14, so that the total electric power supplied/received amount W between the vehicle-mounted battery 14 and all the electric motors 12 is on the electric power consumption side (see the following equation (1)).

$$W = 2\pi \int T_{FR} \cdot \omega_{FR} dt + 2\pi \int T_{FL} \cdot \omega_{FL} dt + 2\pi \int T_{RR} \cdot \omega_{RR} dt + 2\pi \int T_{RL} \cdot \omega_{RL} dt \quad ...(1)$$

where W is the regenerated electric power amount, with its positive sign indicating the electric power regeneration side, and the negative sign indicating the electric power consumption side. Besides, in the foregoing equation, T is the braking torque, with its positive sign indicating the braking torque side, and its negative sign indicating the driving torque side. Furthermore, $\omega$ is the rotation speed of each of the wheels FR, FL, RR, RL.

Therefore, if the distribution between the friction braking torque by the friction control mechanism 18 and the regenerative braking torque or the driving torque by the electric motors 12 is changed according to the amount of remaining charge of the vehicle-mounted battery 14, it becomes unnecessary to provide a friction control mechanism that causes the wheels FR, FL, RR, RL to generate friction braking torques different from each other, and at the same time it becomes possible to appropriately execute the VSC control even when the vehicle-mounted battery 14 is in the fully charged state or the nearly fully charged state.

Referring back to FIG 2, in this embodiment, after computing the required torque of each of the wheels FR, FL, RR, RL by executing the VSC control, the ECU 16 measures the amount of remaining charge of the vehicle-mounted battery 14 on the basis of the output of the battery state sensor 17 (step 104). Then, the ECU 16 alters the distribution between the friction braking torque by the friction control mechanism 18 and the regenerative braking torque or the driving torque by each electric motor 12 which is set with respect to the required torque computed with regard to a corresponding one of the wheels FR, FL, RR, RL, according to the amount of remaining charge of the vehicle-mounted battery 14 (step 106).

Concretely, with respect to the required torque computed for each of the wheels FR, FL, RR, RL, the smaller the amount of remaining charge of the vehicle-mounted battery 14 is, the lower the distribution rate of the friction braking torque by the friction control mechanism 18 is made, and the higher the distribution rate of the regenerative braking torque by the electric motor 12 is made or the lower the distribution rate of the driving torque by the electric motor 12 is made, as shown in FIG 4(A). Then, as shown in FIG 4(B), the larger the amount of remaining charge of the vehicle-mounted battery 14 is, the higher the distribution rate of the friction braking torque by the friction control mechanism 18 is made and the lower the distribution rate of the regenerative braking torque by the electric motor 12 is made or the higher the distribution rate of the driving torque by the electric motor 12 is made.

Incidentally, when the vehicle-mounted battery 14 is at least in the fully charged state, the distribution between the friction braking torque by the friction control mechanism 18 and the regenerative braking torque or the driving torque by each electric motor 12 is set so that the total torque value obtained by summing the torque values set separately for the individual electric motors 12 of the wheels FR, FL, RR, RL is on the drive torque side (the side on which electric power is consumed), that is, at least the electric motor 12 of one of the wheels causes the wheel to generate driving torque.

Then, the ECU 16 causes the friction braking torque and the regenerative braking torque or the driving torque to be generated on each of the wheels FR, FL, RR, RL at a corresponding one of the set distribution ratio (step 108). Concretely, the ECU 16 closes the master cut valve, and drives the pump motor 48, and opens the pressure-increasing linear valve 42 or the pressure-decreasing linear valve 50 so that the set friction braking torque is applied uniformly to the wheels FR, FL, RR, RL. In this case, the friction braking torque regulated by the operation of the pump 44 and the linear valves 42, 50 is applied uniformly to the wheels FR, FL, RR, RL. Besides, the ECU 16 drives the electric motors 12 so that the electric motor 12 of each of the wheels FR, FL, RR, RL generates the set regenerative braking torque on that wheel or applies the set driving torque to that wheel. In this case, regenerative electric power is supplied from the electric motors 12 to the vehicle-mounted battery 14 by causing one or more of the electric motors 12 to generate the set regenerative braking torques on the corresponding one or more of the wheels FR, FL, RR, RL, or the set driving torque is applied to one or more of the wheels FR, FL, RR, RL by supplying electricity from the vehicle-mounted battery 14 to the corresponding one or more of the electric motors 12.

Thus, in the vehicle behavior control device of this embodiment, the braking torques needed for the execution of the VSC control are generated on the wheels FR, FL, RR, RL independently of each other. This construction can be realized by setting an appropriate distribution ratio between the friction braking torque by the friction control mechanism 16, which is capable of applying equal torques to the wheels, and the regenerative braking torque or the driving torque by each of the electric motors 12, which are capable of applying torques to the corresponding wheels independently of each other.

That is, at the time of the VSC control, with respect to the required torques that the individual wheels FR, FL, RR, RL are required to generate, the friction braking torques by the friction control mechanism 16 are set as equal values for all the vehicles, and the regenerative braking torque or the driving torque for the individual electric motors 12 of the wheels are set at torque values that are independent of each other.

In this construction, it is possible to apply the regenerative braking torques or the driving torques separately to each of the wheels FR, FL, RR, RL by the electric motors 12 while applying equal friction braking torques to the wheels FR, FL, RR, RL, so that the wheels FR, FL, RR, RL can be appropriately provided with their respective required torques. Therefore, according to this embodiment, it is not necessary to provide a friction control mechanism that is capable of making the friction braking torques generated on the wheels FR, FL, RR, RL different from each other.

Besides, in the vehicle behavior control device of this embodiment, at the time of execution of the VSC control, the distribution between the friction braking torque by the friction control mechanism 18 and the regenerative braking torque or the driving torque by each electric motor 12 which is set with respect to the required torque of each of the wheels FR, FL, RR, RL according to the amount of remaining charge of the vehicle-mounted battery 14 is altered. Concretely, the larger the amount of remaining charge, the higher the distribution rate of the friction braking torque by the friction control mechanism 18 becomes, and the lower the distribution rate of the regenerative braking torque by each electric motor 12 becomes or the higher the distribution rate of the driving torque by each electric motor 12 becomes. Then, in particular, at least during the fully charged state of the vehicle-mounted battery 14, the distribution therebetween is set so that the total torque value obtained by summing the torque values provided by the electric motors 12 of the wheels FR, FL, RR, RL is on the driving torque side.

In the foregoing construction, even when the vehicle-mounted battery 14 is in the fully charged state or the nearly fully charged state, it is possible to drive the electric motors 12 of all the wheels FR, FL, RR, RL on the electric power consumption side in total while providing required torques that are required individually of the wheels FR, FL, RR, RL In this case, there is no occurrence of an event that the regenerative electric power is recovered into the vehicle-mounted battery 14, and the electric power of the vehicle-mounted battery 14 can be consumed. Therefore, even when the amount of remaining charge of the vehicle-mounted battery 14 is large, the required torques can be applied to the wheels FR, FL, RR, RL by using the electric motors 12 provided in the wheels FR, FL, RR, RL.

Therefore, according to the vehicle behavior control device of this embodiment, it is possible to appropriately apply required torques individually to the wheels FR, FL, RR, RL by using the electric motors 12 provided in the wheels FR, FL, RR, RL and execute the VSC control even during the fully charged state of the vehicle-mounted battery 14, without a need to provide a friction control mechanism capable of making the friction braking torques generated on the wheels FR, FL, RR, RL different from each other. That is, in order to appropriately execute the VSC control, it suffices to control the electric motors 12 of the wheels FR, FL, RR, RL independently of each other, and it is not necessary to provide a friction control mechanism that is capable of making the friction braking torques to be generated on the wheels FR, FL, RR, RL different from each other. Furthermore, the VSC control using the electric motors 12 can be reliably executed without stopping the VSC control at the time of the fully charged state of the vehicle-mounted battery 14.

In the foregoing embodiment, the pressure-increasing linear valve 42 and the pressure-decreasing linear valve 50 each correspond to a "linear valve". The ECU 16 realizes "required torque computation means" by executing the process of step 102 in the routine show in FIG 2, and realizes "torque value setting means" by executing the process of steps 104, 106, and realizes "amount-of-remaining-charge measurement means" by executing the process of step 104, and realizes "torque distribution alteration means" by executing the process of step 106.

Although in the foregoing embodiment, all the wheels FR, FL, RR, RL of the vehicle are driven and braked by their respective electric motors 12, it is also permissible to adopt a construction in which only the front wheels FR, FL or only the rear wheels RR, RL are driven and braked by electric motors 12. In this construction, it becomes unnecessary to provide a friction control mechanism that is capable of making the friction braking torques of only the front wheels or only the rear wheels different from each other.

Besides, in the foregoing embodiment, at the time of execution of the VSC control, the distribution between the friction braking torque by the friction control mechanism 18 and the regenerative braking torque or the driving torque by each electric motor 12 which is set with respect to the required torque of a corresponding one of the wheels FR, FL, RR, RL is altered according to the amount of remaining charge of the vehicle-mounted battery 14 in such a fashion that the larger the amount of remaining charge is, the higher the distribution rate of the friction braking torque by the friction control mechanism 18 is made, and the lower the distribution rate of the regenerative braking torque by the electric motor 12 is made or the higher the distribution rate of the driving torque thereby is made. However, the invention is not limited to such a construction in which the distribution is altered linearly, but the distribution may also be altered in at least two levels according to the amount of remaining charge of the battery. However, in this case, too, when the amount of remaining charge of the vehicle-mounted battery 14 is at least in the fully charge state, the distribution between the friction braking torque by the friction control mechanism 18 and the regenerative braking torque or the driving torque by each electric motor 12 is set so that the total torque value obtained by summing the torque values set separately for each of the electric motors 12 of the wheels FR, FL, RR, RL is on the driving torque side (the side on which electric power is consumed).

While the invention has been described with reference to what are considered to be preferred embodiments thereof, it is to be understood that the invention is not limited to the disclosed embodiments or constructions. On the contrary, the invention is intended to cover various modifications and equivalent arrangements. In addition, while the various elements of the disclosed invention are shown in various combinations and configurations, which are exemplary, other combinations and configurations, including more, less or only a single element, are also within the scope of the appended claims.

**Claims**

1.   A vehicle behavior control device which includes a vehicle-mounted battery (14) into and from which electric power is charged and discharged, electric motors (12) that are provided individually for a plurality of wheels of a vehicle, and that apply driving torque to corresponding ones of the wheels when supplied with electric power from the vehicle-mounted battery (14) or supply regenerative electric power to the vehicle-mounted battery (14) by causing the corresponding ones of the wheels to generate regenerative braking torque, and friction control means (18) for causing the wheels to generate friction braking torque, and which controls behavior of the vehicle by making braking/driving forces applied individually to the wheels different from each other, the vehicle behavior control device being **characterized by** comprising:

   required torque computation means for computing required torques that the wheels are individually required to generate, based on vehicle behavior; and
   torque value setting means for setting, with respect to the required torque of each wheel calculated by the required torque calculation means, a first torque value provided uniformly for all the wheels which is composed of the friction braking torque that the wheel is caused to generate by the friction control means (18), and a second torque value provided for each wheel independently of each other which is composed of at least one of the driving torque and the regenerative braking torque that the wheel is caused to generate by a corresponding one of the electric motors.

2.   The vehicle behavior control device according to claim 1, wherein the torque value setting means includes amount-of-remaining-charge measurement means for measuring amount of remaining charge of the vehicle-mounted battery (14), and torque distribution alteration means for altering distribution between the first torque value and the second torque value according to the amount of remaining charge measured by the amount-of-remaining-charge measurement means.

3.   The vehicle behavior control device according to 2, wherein the torque distribution alteration means increases distribution rate of the first torque value for the amount of remaining charge that is relatively large.

4.   The vehicle behavior control device according to claim 3, wherein the torque distribution alteration means increases the distribution rate of the second torque value composed of the driving torque if the distribution rate of the first torque value is increased.

5.   The vehicle behavior control device according to claim 3 or 4, wherein the torque distribution alteration means decreases the distribution rate of the second torque value composed of the regenerative braking torque if the distribution rate of the first torque value is increased.

6.   The vehicle behavior control device according to claim 3, wherein during a period during which the amount of remaining charge is at least in the fully charged state, the torque distribution alteration means alters the distribution between the first torque value and the second torque value so that a summed value of the second torque values during the period is on a driving torque side.

7.   The vehicle behavior control device according to any one of claims 1 to 6, wherein the friction control means (18) is a friction control mechanism that simultaneously applies equal friction braking torques to at least two wheels.

8.   The vehicle behavior control device according to claim 7, wherein the friction control mechanism includes a master cylinder (24) that connects to the brake operation means, a wheel cylinder (26) that is provided separately for each wheel, and that communicates with the master cylinder (24) via a communication passageway so as to apply the friction braking torque to wheel, a pump (44) capable of ejecting a brake fluid of high pressure, and a linear valve (42) that adjusts brake fluid pressure of each wheel cylinder that is supplied from an ejection side of the pump (44) and is discharged to a reservoir tank (32).

9. The vehicle behavior control device according to claim 1, wherein the required torque computation means computes the required torque separately for each wheel that needs to be generated so as to stabilize a cornering behavior of the vehicle based on a difference of target yaw rate and actual yaw rate of the vehicle.

10. The vehicle behavior control device according to claim 1, wherein the required torque computation means computes the required torque separately for each wheel that needs to be generated so as to stabilize the cornering behavior of the vehicle based on the actual yaw rate of the vehicle and acceleration of the vehicle.

11. The vehicle behavior control device according to claim 1, wherein the required torque computation means determines whether or not there is a wheel slip caused by application of the driving torque with regard to each of the wheel, and computes the required torque separately for each wheel that needs to be generated so as to restrain each wheel from racing during acceleration, based on a result of determination regarding the wheel slip.

12. The vehicle behavior control device according to claim 1, wherein the required torque computation means determines whether or not there is a wheel slip caused by application of the friction braking torque with regard to each of the wheels, and computes the required torque separately for each wheel that needs to be generated so as to restrain each wheel from locking during braking, based on a result of determination regarding the wheel slip.

13. A vehicle behavior control method for a vehicle which includes a vehicle-mounted battery (14) into and from which electric power is able to be charged and discharged, electric motors (12) that are provided individually for a plurality of wheels of the vehicle, and that apply driving torque to corresponding ones of the wheels when supplied with electric power from the vehicle-mounted battery (14) or supply regenerative electric power to the vehicle-mounted battery (14) by causing the corresponding ones of the wheels to generate regenerative braking torque, and friction control means (18) for causing the wheels to generate friction braking torque, and which controls behavior of the vehicle by making braking/driving forces applied individually to the wheels different from each other, the vehicle behavior control method being **characterized by** comprising:

   computing required torques that the wheels are required to generate, based on vehicle behavior; and
   setting a first torque value that is composed of the friction braking torque that each wheel is caused to generate by the friction control means, and a second torque value that is composed of at least one of the driving torque and the regenerative braking torque that each wheel is independently caused to generate by a corresponding one of the electric motors (12), with respect to the required torque calculated.

14. The vehicle behavior control method according to claim 13, further comprising:

   measuring amount of remaining charge of the vehicle-mounted battery (14); and
   altering distribution between the first torque value and the second torque value according to the amount of remaining charge.

**Patentansprüche**

1. Fahrzeugverhaltenssteuervorrichtung, welche eine fahrzeugmontierte Batterie (14), die mit elektrischer Energie geladen und entladen wird, elektrische Motoren (12), die individuell für eine Vielzahl von Fahrzeugrädern vorgesehen sind und die ein Antriebsmoment an die entsprechenden Räder anbringen, wenn sie von der fahrzeugmontierten Batterie (14) mit elektrischer Energie versorgt werden oder regenerative elektrische Energie der fahrzeugmontierten Batterie (14) zuführen, indem sie die entsprechenden Räder ein regeneratives Bremsmoment erzeugen lassen, und eine Reibungssteuereinrichtung (14), um die Räder ein Reibbremsmoment erzeugen zu lassen, aufweist und welche das Fahrzeugverhalten steuert, indem die individuell an den Rädern angebrachten Brems-/Antriebskräfte zueinander unterschiedlich gemacht werden, **gekennzeichnet ist durch**:

   eine Momentenbedarfsberechnungseinrichtung zum Berechnen auf der Grundlage des Fahrzeugverhaltens der notwendigen Momente, welche die Räder individuell erzeugen müssen; und
   eine Momentenwerteinstelleinrichtung, um in Hinblick auf das **durch** die Momentenbedarfsberechnungseinrichtung berechnete notwendige Drehmoment von jedem Rad einen ersten, für alle Räder einheitlich bereitgestellten Momentenwert einzustellen, der aus dem Reibbremsmoment besteht, das die Reibungssteuerungseinrichtung (18) das Rad erzeugen lässt, und zweiten, einen jedem Rad unabhängig von den anderen bereitgestellten Momentenwert einzustellen, der aus dem Antriebsmoment und/oder dem regenerativen Bremsmoment besteht, das ein entsprechender Elektromotor das Rad erzeugen lässt.

2. Fahrzeugverhaltenssteuervorrichtung nach Anspruch 1, wobei die Momentenwerteinstelleinrichtung eine Restlademengemesseinrichtung zum Messen einer verbleibenden Lademenge der fahrzeugmontierten Batterie (14) und eine Momentenverteilungsänderungseinrichtung zum Ändern der Verteilung zwischen dem ersten Momentenwert und dem zweiten Momentenwert gemäß der durch die Restlademengeberechnungseinrichtung berechneten verbleibenden Lademenge aufweist.

3. Fahrzeugverhaltenssteuervorrichtung nach Anspruch 2, wobei die Momentenverteilungsänderungseinrichtung die Verteilungsrate des ersten Momentenwerts erhöht, wenn die verbleibende Lademenge relativ groß ist.

4. Fahrzeugverhaltenssteuervorrichtung nach Anspruch 3, wobei die Momentenverteilungsänderungseinrichtung die Verteilungsrate des zweiten, aus dem Antriebsmoment bestehenden Momentenwerts erhöht, wenn die Verteilungsrate des ersten Momentenwerts erhöht wird.

5. Fahrzeugverhaltenssteuervorrichtung nach Anspruch 3 oder 4, wobei die Momentenverteilungsänderungseinrichtung die Verteilungsrate des zweiten, aus dem regenerativen Bremsmoment bestehen Momentenwerts verringert, wenn die Verteilungsrate des ersten Momentenwerts erhöht wird.

6. Fahrzeugverhaltenssteuervorrichtung nach Anspruch 3, wobei während einer Zeitdauer, während welcher sich die verbleibende Lademenge zumindest im voll aufgeladenen Zustand befindet, die Momentenverteilungsänderungseinrichtung die Verteilung zwischen dem ersten Momentenwert und dem zweiten Momentenwert so ändert, dass sich eine Summe der zweiten Momentenwerte während der Zeitdauer auf einer Antriebsmomentseite befindet.

7. Fahrzeugverhaltenssteuervorrichtung nach einem der Ansprüche 1 bis 6, wobei die Reibungssteuereinrichtung (18) ein Reibungssteuermechanismus ist, der gleiche Reibbremsmomente gleichzeitig an zumindest zwei Rädern anbringt.

8. Fahrzeugverhaltenssteuervorrichtung nach Anspruch 7, wobei der Reibungssteuermechanismus einen Hauptzylinder (24), der mit der Bremsbetätigungseinrichtung verbunden ist, einen Radzylinder (26), der separat für jedes Rad vorgesehen ist und der mit dem Hauptzylinder (24) über eine Verbindungsleitung verbunden ist, um das Reibbremsmoment am Rad anzubringen, eine Pumpe (44) zum Ausstoßen eines Bremsfluids mit hohem Druck und ein Linearventil (42) aufweist, das den Bremsfluiddruck von jedem Radzylinder einstellt, der von einer Ausgabeseite der Pumpe (44) geliefert wird und an einen Speichertank (32) abgegeben wird.

9. Fahrzeugverhaltenssteuervorrichtung nach Anspruch 1, wobei die Momentenbedarfsberechnungseinrichtung auf der Grundlage einer Differenz zwischen einem Sollgiermoment und einem Istgiermoment des Fahrzeugs das notwendige Moment separat für jedes Rad berechnet, welches erzeugt werden muss, um ein Kurvenverhalten des Fahrzeugs zu stabilisieren.

10. Fahrzeugverhaltenssteuervorrichtung nach Anspruch 1, wobei die Momentenbedarfsberechnungseinrichtung auf der Grundlage der Istgierrate des Fahrzeugs und einer Beschleunigung des Fahrzeugs das notwendige Moment separat für jedes Rad berechnet, welches erzeugt werden muss, um das Kurvenverhalten des Fahrzeugs zu stabilisieren.

11. Fahrzeugverhaltenssteuervorrichtung nach Anspruch 1, wobei die Momentenbedarfsberechnungseinrichtung hinsichtlich jedem Rad bestimmt, ob durch Anbringung des Antriebsmoments ein Radschlupf verursacht wird, und auf der Grundlage eines Bestimmungsergebnisses hinsichtlich des Radschlupfs das notwendige Moment separat für jedes Rad berechnet, welches erzeugt werden muss, um während einer Beschleunigung jedes Rad vom Durchdrehen abzuhalten.

12. Fahrzeugverhaltenssteuervorrichtung nach Anspruch 1, wobei die Momentenbedarfsberechnungseinrichtung hinsichtlich jedem Rad bestimmt, ob durch die Anbringung des Reibbremsmoments ein Radschlupf verursacht wird, und auf der Grundlage eines Bestimmungsergebnisses hinsichtlich des Radschlupfs das notwendige Moment separat für jedes Rad berechnet, welches erzeugt werden muss, um während des Bremsens jedes Rad vom Blockieren abzuhalten.

**13.** Fahrzeugverhaltenssteuerverfahren für ein Fahrzeug, welches eine fahrzeugmontierte Batterie (14), die mit elektrischer Energie geladen und entladen werden kann, elektrische Motoren (12), die individuell für eine Vielzahl von Fahrzeugrädern vorgesehen sind und ein Antriebsmoment an entsprechenden Rädern anbringt, wenn elektrische Energie von der fahrzeugmontierten Batterie (14) geliefert wird oder regenerative elektrische Energie der fahrzeugmontierten Batterie (14) zuführt, indem sie die entsprechenden Räder ein regeneratives Bremsmoment erzeugen lassen, und eine Reibungssteuereinrichtung (18), um die Räder eine Reibbremskraft erzeugen zu lassen, aufweist und welches ein Fahrzeugverhalten steuert, indem es die individuell an den Rädern angebrachten Brems-/Antriebskräfte zueinander unterschiedlich macht, **gekennzeichnet durch** die Schritte:

Berechnen von notwendigen Momenten, die die Räder erzeugen müssen, auf der Grundlage des Fahrzeugverhaltens; und

Einstellen im Hinblick auf das berechnete notwendige Moment eines ersten Momentenwerts, das aus dem Reibbremsmoment besteht, das die Reibungssteuereinrichtung jedes Rades erzeugen lässt, und eines zweiten Momentenwerts, das aus dem Antriebsmoment und/oder dem regenerativen Bremsmoment besteht, das ein entsprechender Elektromotor (12) jedes Rad unabhängig erzeugen lässt.

**14.** Fahrzeugverhaltenssteuerverfahren nach Anspruch 13, ferner **gekennzeichnet durch**:

Messen einer verbleibenden Lademenge der fahrzeugmontierten Batterie (14); und

Ändern einer Verteilung zwischen dem ersten Momentenwert und dem zweiten Momentenwert gemäß der verbleibenden Lademenge.

## Revendications

**1.** Dispositif de commande de comportement de véhicule qui comporte une batterie (14) montée sur un véhicule dans laquelle de l'énergie électrique est chargée et à partir de laquelle celle-ci est déchargée, des moteurs électriques (12) qui sont prévus individuellement pour une pluralité de roues d'un véhicule, et qui appliquent un couple d'entraînement à des roues correspondantes parmi les roues lorsqu'ils sont alimentés en énergie électrique provenant de la batterie (14) montée sur un véhicule ou qui alimentent de l'énergie électrique régénérative à la batterie (14) montée sur un véhicule en amenant les roues correspondantes parmi les roues à générer un couple de freinage régénératif, et un moyen de commande de friction (18) destiné à amener les roues à générer un couple de freinage mécanique, et qui commande le comportement du véhicule en rendant des forces de freinage/entraînement appliquées individuellement aux roues différentes les unes des autres, le dispositif de commande de comportement de véhicule étant **caractérisé en ce qu'**il comprend :

un moyen de calcul de couple requis destiné à calculer des couples requis que les roues doivent individuellement générer, sur la base du comportement de véhicule ; et

un moyen de réglage de valeur de couple destiné à régler, par rapport au couple requis de chaque roue calculé par le moyen de calcul de couple requis, une première valeur de couple fournie de manière uniforme à toutes les roues qui est composée du couple de freinage mécanique que la roue est amenée à générer par le moyen de commande de friction (18), et une deuxième valeur de couple fournie pour chaque roue indépendamment les unes des autres qui est composée d'au moins l'un du couple d'entraînement et du couple de freinage régénératif que la roue est amenée à générer par un moteur correspondant parmi les moteurs électriques.

**2.** Dispositif de commande de comportement de véhicule selon la revendication 1, dans lequel le moyen de réglage de valeur de couple comporte un moyen de mesure de quantité de charge restante destiné à mesurer une quantité de charge restante de la batterie (14) montée sur un véhicule, et un moyen de modification de distribution de couple destiné à modifier une distribution entre la première valeur de couple et la deuxième valeur de couple selon la quantité de charge restante mesurée par le moyen de mesure de quantité de charge restante.

**3.** Dispositif de commande de comportement de véhicule selon la revendication 2, dans lequel le moyen de modification de distribution de couple augmente un taux de distribution de la première valeur de couple pour la quantité de charge restante qui est relativement importante.

**4.** Dispositif de commande de comportement de véhicule selon la revendication 3, dans lequel le moyen de modification de distribution de couple augmente le taux de distribution de la deuxième valeur de couple composée du couple d'entraînement si le taux de distribution de la première valeur de couple est augmenté.

5. Dispositif de commande de comportement de véhicule selon la revendication 3 ou 4, dans lequel le moyen de modification de distribution de couple diminue le taux de distribution de la deuxième valeur de couple composée du couple de freinage régénératif si le taux de distribution de la première valeur de couple est augmenté.

6. Dispositif de commande de comportement de véhicule selon la revendication 3, dans lequel, pendant une période au cours de laquelle la quantité de charge restante est au moins à l'état complètement chargé, le moyen de modification de distribution de couple modifie la distribution entre la première valeur de couple et la deuxième valeur de couple de sorte qu'une valeur additionnée des deuxièmes valeurs de couple pendant la période soit sur un côté de couple d'entraînement.

7. Dispositif de commande de comportement de véhicule selon l'une quelconque des revendications 1 à 6, dans lequel le moyen de commande de friction (18) est un mécanisme de commande de friction qui applique simultanément des couples de freinage mécanique égaux à au moins deux roues.

8. Dispositif de commande de comportement de véhicule selon la revendication 7, dans lequel le mécanisme de commande de friction comporte un maître-cylindre (24) qui est relié au moyen d'actionnement de frein, un cylindre de roue (26) qui est prévu séparément pour chaque roue, et qui communique avec le maître-cylindre (24) par l'intermédiaire d'un passage de communication de manière à appliquer le couple de freinage mécanique à la roue, une pompe (44) capable d'éjecter un liquide de frein à haute pression, et une soupape linéaire (42) qui régule la pression de liquide de frein de chaque cylindre de roue qui est alimenté à partir d'un côté d'éjection de la pompe (44) et est déchargé à un réservoir (32).

9. Dispositif de commande de comportement de véhicule selon la revendication 1, dans lequel le moyen de calcul de couple requis calcule le couple requis séparément pour chaque roue, qui doit être généré de manière à stabiliser un comportement en virage du véhicule sur la base d'une différence de vitesse de lacet cible et de vitesse de lacet réelle du véhicule.

10. Dispositif de commande de comportement de véhicule selon la revendication 1, dans lequel le moyen de calcul de couple requis calcule le couple requis séparément pour chaque roue, qui doit être généré de manière à stabiliser le comportement en virage du véhicule sur la base de la vitesse de lacet réelle du véhicule et de l'accélération du véhicule.

11. Dispositif de commande de comportement de véhicule selon la revendication 1, dans lequel le moyen de calcul de couple requis détermine s'il existe un patinage de roues provoqué par l'application du couple d'entraînement par rapport à chaque roue ou non, et calcule le couple requis séparément pour chaque roue, qui doit être généré de manière à limiter la course de chaque roue pendant l'accélération, sur la base d'un résultat de détermination concernant le patinage de roues.

12. Dispositif de commande de comportement de véhicule selon la revendication 1, dans lequel le moyen de calcul de couple requis détermine s'il existe un patinage de roues provoqué par l'application du couple de freinage mécanique par rapport à chaque roue ou non, et calcule le couple requis séparément pour chaque roue devant être généré de manière à empêcher le blocage de chaque roue pendant le freinage, sur la base d'un résultat de détermination concernant le patinage de roues.

13. Procédé de commande de comportement de véhicule pour un véhicule qui comporte une batterie (14) montée sur un véhicule dans laquelle de l'énergie électrique peut être chargée et à partir de laquelle celle-ci peut être déchargée, des moteurs électriques (12) qui sont prévus individuellement pour une pluralité de roues du véhicule, et qui appliquent un couple d'entraînement à des roues correspondantes parmi les roues lorsqu'ils sont alimentés en énergie électrique provenant de la batterie (14) montée sur un véhicule ou qui alimentent l'énergie électrique régénérative à la batterie (14) montée sur un véhicule en amenant les roues correspondantes parmi les roues à générer un couple de freinage régénératif, et un moyen de commande de friction (18) destiné à amener les roues à générer un couple de freinage mécanique, et qui commande un comportement du véhicule en rendant des forces de freinage/entraînement appliquées individuellement aux roues différentes les unes des autres, le procédé de commande de comportement de véhicule étant **caractérisé en ce qu'**il comprend le fait :

de calculer des couples requis que les roues doivent générer, sur la base d'un comportement de véhicule ; et

EP 2 231 449 B1

de régler une première valeur de couple qui est composée du couple de freinage mécanique que chaque roue est amenée à générer par le moyen de commande de friction, et une deuxième valeur de couple qui est composée d'au moins l'un du couple d'entraînement et du couple de freinage régénératif que chaque roue est amenée à générer indépendamment par un moteur correspondant parmi les moteurs électriques (12), par rapport au couple requis calculé.

14. Procédé de commande de comportement de véhicule selon la revendication 13, comprenant en outre le fait :

de mesurer une quantité de charge restante de la batterie (14) montée sur un véhicule ; et
de modifier une distribution entre la première valeur de couple et la deuxième valeur de couple selon la quantité de charge restante.

# FIG.1

WHEEL SPEED SENSORS ~60

YAW RATE SENSOR ~62

ACCELERATION SENSOR ~64

STEERING SENSOR ~66

ECU

BATTERY

EP 2 231 449 B1

# FIG.2

```
        ┌─────────────┐
        │   START     │
        └─────────────┘
               │
               ▼
         ◇─────────────◇              100
        ╱  VSC CONTROL  ╲
       ╱ EXECUTION CONDITION╲────── NO ───────┐
        ╲   SATISFIED?   ╱                     │
         ◇─────────────◇                       │
               │                               │
              YES                              │
               ▼                               │
        ┌─────────────────────┐               │
        │  COMPUTE REQUIRED    │── 102         │
        │ TORQUE OF EACH WHEEL │               │
        └─────────────────────┘               │
               │                               │
               ▼                               │
        ┌─────────────────────┐               │
        │   MEASURE AMOUNT OF  │── 104         │
        │ REMAINING BATTERY CHARGE│            │
        └─────────────────────┘               │
               │                               │
               ▼                               │
    ┌──────────────────────────────┐          │
    │ SET DISTRIBUTION BETWEEN FRICTION│       │
    │ BRAKING TORQUE AND DRIVE TORQUE │── 106  │
    │ (OR REGENERATIVE BRAKING TORQUE)│        │
    └──────────────────────────────┘          │
               │                               │
               ▼                               │
    ┌──────────────────────────────┐          │
    │ APPLY SET FRICTION BRAKING TORQUE│       │
    │ AND SET DRIVING TORQUE (OR SET  │── 108  │
    │ REGENERATIVE BRAKING TORQUE)    │        │
    └──────────────────────────────┘          │
               │                               │
               ▼◄──────────────────────────────┘
        ┌─────────────┐
        │    END      │
        └─────────────┘
```

# FIG.3

MOTOR TORQUE [LARGE]
(REGENERATION SIDE)

REQUIRED
TORQUE

MOTOR TORQUE [SMALL]
(REGENERATION SIDE)

BRAKING TORQUE

FRICTION BRAKING
TORQUE [LARGE]

FRICTION BRAKING
TORQUE [SMALL]

t

MOTOR TORQUE
[LARGE] (DRIVE SIDE)

MOTOR TORQUE
[SMALL] (DRIVE SIDE)

FIG. 4A

FIG. 4B

**REFERENCES CITED IN THE DESCRIPTION**

**Patent documents cited in the description**

- JP 2007050751 A

- US 2004176899 A1